# EUROPEAN PATENT APPLICATION

(11) **EP 4 691 816 A1**
(43) Date of publication of application: **11.02.2026**
(21) Application number: 25193649.8
(22) Date of filing: 04.08.2025
(51) Int. Cl.: B60H 1/00, B60H 1/32, F25B 49/00

(54) **INTEGRATED TEMPERATURE CONTROL SYSTEM FOR VEHICLE AND CONTROL METHOD THEREOF**

(30) Priority: 07.08.2024 CN 202411077922
(71) Applicant: Volvo Car Corporation, 405 31 Göteborg (SE)
(72) Inventor: FAN, Hongjun, Shanghai, 201815 (CN); GUO, Panpan, Shanghai, 201815 (CN)
(74) Representative: Maiwald GmbH

(57) **Abstract**

The present application discloses an integrated temperature control system (1) for a vehicle, comprising: an air suspension subsystem (10), which comprises a working medium, the working medium being a flame-retardant gas; and a temperature control subsystem (20), which is connected to the air suspension subsystem (10) and comprises a refrigerant. The temperature control subsystem (20) is configured to operably receive the working medium in the air suspension subsystem (10), and is configured to perform control based on the refrigerant leakage concentration in the temperature control subsystem (20) and a signal related to the refrigerant leakage, so as to selectively inject the working medium into the interior of the temperature control subsystem (20). The present application also discloses a method for controlling the integrated temperature control system (1) for a vehicle.

## Description

### TECHNICAL FIELD

The present application relates to the field of vehicles, and in particular to an integrated temperature control system for a vehicle, and a method for controlling the integrated temperature control system for a vehicle.

### BACKGROUND

Existing vehicle air conditioners mainly use R134a (1,1,1,2-tetrafluoroethane) or R1234yf (2,3,3,3-tetrafluoropropylene) as refrigerants. The above substances belong to Freon media, and under increasingly stringent environmental protection requirements, they may be banned from continued use in vehicle air conditioners. To address this problem, it is necessary to develop environmentally friendly vehicle air conditioning systems. Alternative refrigerants include R744 (carbon dioxide) and R290 (propane), but these refrigerants all have their own shortcomings. The working pressure of the air conditioning system using R744 as the refrigerant is relatively high, which makes the strength requirements of the air conditioning system higher, so the manufacturing cost of the air conditioning system is relatively high. At the same time, the higher working pressure makes the air conditioning system prone to leakage problems. In addition, the air conditioning system using R744 as the refrigerant has poor cooling performance in hot weather, affecting the user experience. On the other hand, although the air conditioning system using R290 as the refrigerant has balanced performance, a simple system and low cost, due to the flammable characteristics of propane, this air conditioning system has the risk of combustion or even explosion in a high-voltage electrical environment, and has a large safety hazard.

Therefore, the problems that need to be solved in the prior art are the safety of environmentally friendly refrigerants and the reliability of the system. It is expected to develop an air conditioning system for vehicles that is both environmentally friendly and safe.

### SUMMARY OF THE INVENTION

In order to solve the problems in the prior art, the present application proposes an integrated temperature control system for a vehicle, comprising: an air suspension subsystem, which includes a working medium, which is a flame-retardant gas; and a temperature control subsystem, which is connected to the air suspension subsystem and includes a refrigerant; characterized in that the temperature control subsystem is configured to operably receive the working medium in the air suspension subsystem, and is configured to be controlled based on the refrigerant leakage concentration in the temperature control subsystem and a signal related to the refrigerant leakage, so as to selectively inject the working medium into the interior of the temperature control subsystem.

According to an optional embodiment, the temperature control subsystem includes a housing and a fire extinguishing pipeline, a refrigerant pipeline, a compressor, a water-cooled condenser, a receiver drier, an electronic expansion valve, a evaporator, a working medium concentration sensor, a plurality of nozzles, a second temperature and pressure sensor, and a smoke sensor arranged inside the housing; the fire extinguishing pipeline is arranged around the inner wall of the housing and is connected to the air suspension subsystem to receive the working medium from the air suspension subsystem; the refrigerant pipeline includes a refrigerant circulating therein, and is configured to start from the compressor, sequentially connect the water-cooled condenser, the receiver drier, the electronic expansion valve and the evaporator, and then connect back to the compressor; The working medium concentration sensor and the smoke sensor are arranged at a position close to the center of the housing, and are respectively configured to detect the refrigerant leakage concentration in the housing and to obtain the signal related to the refrigerant leakage; the multiple nozzles are connected to the fire extinguishing pipeline, wherein the multiple nozzles are arranged at equal intervals based on the length of the fire extinguishing pipeline, or at least three of the multiple nozzles are respectively arranged at positions close to the compressor, the water-cooled condenser and the evaporator, and the spray directions are respectively toward the compressor, the water-cooled condenser and the evaporator; the second temperature and pressure sensor is connected to the refrigerant pipeline to measure the temperature and pressure of the refrigerant in the refrigerant pipeline.

According to an optional embodiment, the refrigerant pipeline is configured to indirectly exchange heat with a heat exchange circuit outside the temperature control subsystem through the water-cooled condenser and the evaporator.

According to an optional embodiment, the air suspension subsystem includes a compressor module, a valve module and an air spring module; the compressor module is configured to increase the pressure of the working medium; the valve module is connected to the compressor module to receive the high-pressure working medium from the compressor module, and is configured to selectively deliver the high-pressure working medium to the air spring module and the temperature control subsystem; the air spring module is connected to the compressor module and the valve module, and is configured to drive the air spring using the high-pressure working medium from the valve module, and deliver the generated low-pressure working medium back to the compressor module.

According to an optional embodiment, the housing adopts a closed design; the temperature control subsystem also includes a pressure relief valve arranged on the housing; the pressure relief valve is configured to open after the working medium completes fire extinguishing to discharge the working medium into the external environment.

According to an optional embodiment, the housing adopts a semi-open design; the temperature control subsystem also includes an exhaust fan arranged on the housing; the exhaust fan is configured to reduce the refrigerant leakage concentration by exhausting air.

According to an optional embodiment, the working medium includes carbon dioxide; and the refrigerant includes propane.

The present application also proposes a method for controlling an integrated temperature control system of a vehicle, wherein the integrated temperature control system is according to the integrated temperature control system described in this article; the method comprises the following steps: detecting the refrigerant leakage concentration and the signal related to the refrigerant leakage in the temperature control subsystem; based on the refrigerant leakage concentration and the signal related to the refrigerant leakage, delivering the working medium in the air suspension subsystem to the temperature control subsystem; spraying the working medium onto the various components of the temperature control subsystem; and discharging the gas in the temperature control subsystem through the pressure relief valve when the spraying continues for a period of time and it is detected that the pressure inside the temperature control subsystem exceeds the set value.

The present application also proposes a method for controlling an integrated temperature control system of a vehicle, wherein the integrated temperature control system is according to the integrated temperature control system described in this article; the method comprises the following steps: detecting the refrigerant leakage concentration and the signal related to the refrigerant leakage in the temperature control subsystem; determining the risk level of the temperature control subsystem based on the refrigerant leakage concentration and the signal related to the refrigerant leakage; when the risk level is low, sending a refrigerant leakage alarm and corresponding driving advice to the driver of the vehicle to which the integrated temperature control system belongs; when the risk level is moderate, sending a refrigerant leakage alarm and corresponding driving advice to the driver of the vehicle, send a distance keeping request to the drivers of vehicles adjacent to the vehicle, and ventilate the temperature control subsystem with the external environment to reduce the refrigerant leakage concentration; when the risk level is high, send a refrigerant leakage alarm, a parking alarm and an evacuation alarm to the driver of the vehicle, send a distance keeping request to the drivers of vehicles adjacent to the vehicle, send a rescue request and the location information of the vehicle to the fire department, transport the working medium in the air suspension subsystem to the temperature control subsystem, and spray the working medium onto the components of the temperature control subsystem.

According to an optional embodiment, the signal related to the refrigerant leakage includes smoke signal and fire signal; determining the risk level includes: when the refrigerant leakage concentration is greater than 0 and less than the first concentration, determining the risk level as low; when the refrigerant leakage concentration is greater than or equal to the first concentration and less than the second concentration, determining the risk level as moderate; when the refrigerant leakage concentration is greater than or equal to the second concentration, or a smoke signal or a fire signal is detected, determining the risk level as high.

The integrated temperature control system for vehicles according to the present application uses R744 from the air suspension subsystem as a flame retardant for the air-conditioning system, which greatly improves the safety of the temperature control subsystem using R290 as a refrigerant. The integrated temperature control system for vehicles according to the present application adopts a secondary circuit solution. The refrigerant circuit inside the temperature control subsystem is not directly connected to the heat exchange circuit outside the temperature control subsystem, but indirectly exchanges heat through a water-cooled condenser and a evaporator. The refrigerant in the temperature control subsystem can continue to flow in one direction under cooling or heating conditions. This configuration of the temperature control subsystem can reduce the system complexity caused by the reversing of the refrigerant when switching between cooling and heating, so it is very easy to achieve a compact modular layout to save costs and improve robustness.

Alternatively, in a vehicle without an air spring module, the integrated temperature control system for a vehicle according to the present application can also use the carbon dioxide in the gas tank as a flame retardant for the air conditioning system. The method for controlling the air conditioning system according to the present application provides a real-time safety detection solution, providing all-round protection for the air conditioning system. The air conditioning system for a vehicle according to the present application reduces greenhouse gas emissions and the use of PFAS substances, and is more environmentally friendly.

### BRIEF DESCRIPTION OF THE DRAWINGS

The foregoing and other aspects of the present application will be more fully understood from the detailed description below in conjunction with the following drawings. It should be noted that the scales of the drawings may be different for the purpose of clear description, but this will not affect the understanding of the present application.
FIG. 1 is a schematic diagram of an integrated temperature control system for a vehicle according to the present application.
FIG. 2 is a schematic diagram of an air suspension subsystem in the integrated temperature control system of FIG. 1.
FIG. 3 is a schematic diagram of a temperature control subsystem in an integrated temperature control system according to the first embodiment of the present application.
FIG. 4 is a schematic diagram of a temperature control subsystem in an integrated temperature control system according to a second embodiment of the present application.

Like reference numerals in the various drawings represent like components.

### DETAILED DESCRIPTION

The exemplary embodiments of the present application will be described in more detail below with reference to the accompanying drawings. Although the exemplary embodiments of the present application are shown in the accompanying drawings, it should be understood that the present application can be implemented in various forms and should not be limited by the embodiments described herein. On the contrary, these embodiments are provided in order to enable a more thorough understanding of the present application and to fully convey the scope of the present application to those skilled in the art.

It should be noted that the terms "installed", "connected" and "connected" should be understood in a broad sense, for example, it can be a fixed connection, a detachable connection, or an integral connection; it can be a mechanical connection or an electrical connection; it can be a direct connection or an indirect connection through an intermediate medium, and it can be the internal connection of two elements.

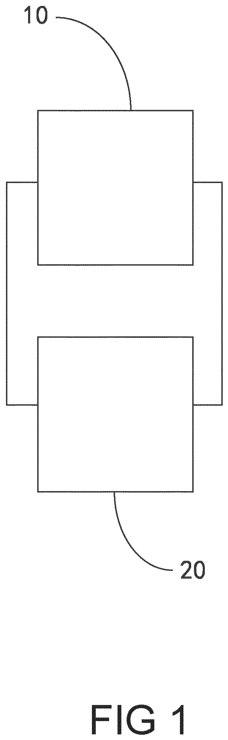

FIG. 1 is a schematic diagram of an integrated temperature control system for a vehicle according to the present application. The integrated temperature control system 1 comprises an air suspension subsystem 10 and a temperature control subsystem 20. The temperature control subsystem 20 is connected to the air suspension subsystem 10 via a gas pipeline.

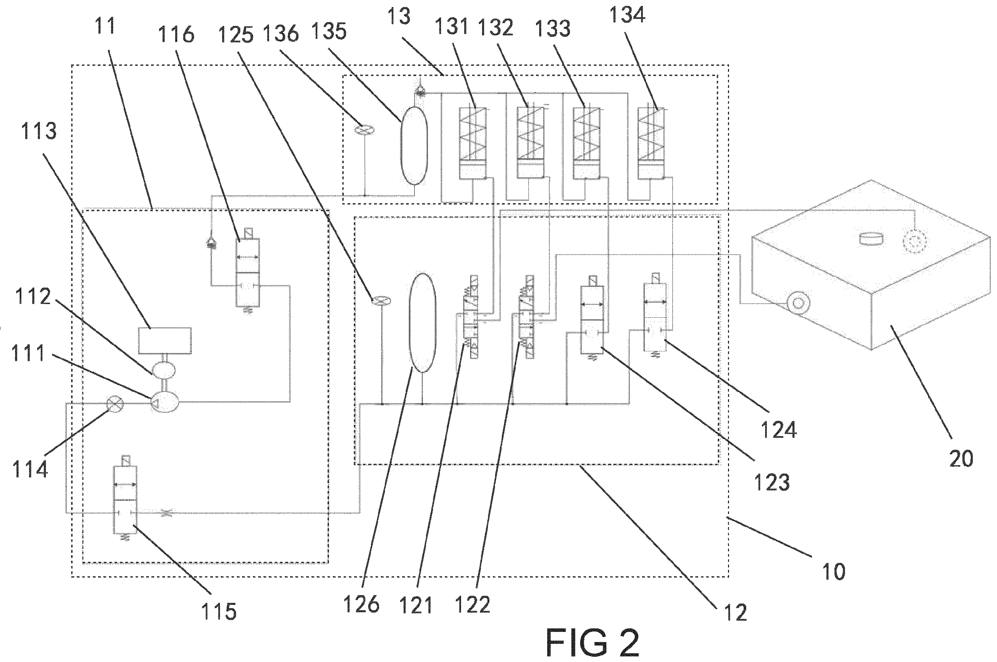

FIG. 2 is a schematic diagram of an air suspension subsystem in the integrated temperature control system of FIG. 1. The air suspension subsystem 10 uses a flame-retardant gas (e.g., R744, i.e., carbon dioxide) as a working medium, and includes a compressor module 11, a valve module 12, and an air spring module 13. The valve module 12 is connected to the compressor module 11 to receive the high-pressure working medium from the compressor module 11, and is operable to deliver the high-pressure working medium to the air spring module 13 and the temperature control subsystem 20. The air spring module 13 is connected to the compressor module 11 and the valve module 12 to drive the air spring with the high-pressure working medium from the valve module 12 to provide shock absorption for the vehicle, and deliver the low-pressure working medium that has been used back to the compressor module 11.

The compressor module 11 includes a compression chamber 111, a motor 112, an inverter 113, a first temperature and pressure sensor 114, a first two-position two-way valve 115, and a second two-position two-way valve 116. The motor 112 is connected to the compression chamber 111 to provide power to the compression chamber 111. The inverter 113 is connected to the motor 112 or integrated into the motor 112 to control the start and stop of the motor 112. The first two-position two-way valve 115 is connected between the compression chamber 111 and the valve module 12. Specifically, the input end of the first two-position two-way valve 115 is connected to the exhaust port of the compression chamber 111, and the output end is connected to the valve module 12. The second two-position two-way valve 116 is connected between the compression chamber 111 and the air spring module 13. Specifically, the input end of the second two-position two-way valve 116 is connected to the air spring module 13, and the output end is connected to the air inlet of the compression chamber 111. The first temperature and pressure sensor 114 is disposed in a pipeline connecting the compression chamber 111 and the first two-position two-way valve 115 to measure the temperature and pressure of the high-pressure working medium discharged from the compression chamber 111.

The valve module 12 includes a first three-position three-way valve 121, a second three-position three-way valve 122, a third two-position two-way valve 123, a fourth two-position two-way valve 124, a first pressure sensor 125 and a first air storage tank 126. The first three-position three-way valve 121, the second three-position three-way valve 122, the third two-position two-way valve 123 and the fourth two-position two-way valve 124 are connected to the compressor module 11 and the air spring module 13. Specifically, the input end of the first three-position three-way valve 121, the input end of the second three-position three-way valve 122, the input end of the third two-position two-way valve 123 and the input end of the fourth two-position two-way valve 124 are connected in parallel to the output end of the first two-position two-way valve 115. The first output end of the first three-position three-way valve 121, the first output end of the second three-position three-way valve 122, the output end of the third two-position two-way valve 123 and the output end of the fourth two-position two-way valve 124 are respectively connected to each air spring of the air spring module 13. The second output end of the first three -position three-way valve 121 and the second output end of the second three-position three-way valve 122 are connected to the temperature control subsystem 20 to selectively deliver the high-pressure working medium to the temperature control subsystem 20, and adjust and distribute the flow of the working medium into the air spring module 13 and the temperature control subsystem 20. When the temperature control subsystem 20 generates a risk of combustion, the second output end of the first three-position three-way valve 121 and the second output end of the second three-position three-way valve 122 are opened, so that the flame-retardant working medium enters the temperature control subsystem 20 for fire extinguishing. The first pressure sensor 125 and the first air storage tank 126 are connected to the pipeline connecting the first two-position two -way valve 115 and the first three-position three-way valve 121, the second three-position three-way valve 122, the third two-position two-way valve 123, the fourth two-position two-way valve 124 and the first air storage tank 126 to measure the pressure of the working medium flowing into the valve module 12 and selectively store the working medium to reduce the pressure fluctuation of the working medium.

The air spring module 13 includes a first air spring 131, a second air spring 132, a third air spring 133, a fourth air spring 134, a second air tank 135 and a second pressure sensor 136. The first air spring 131, the second air spring 132, the third air spring 133 and the fourth air spring 134 are connected to the valve module 12. Specifically, the input end of the first air spring 131 is connected to the first output end of the first three-position three-way valve 121. The input end of the second air spring 132 is connected to the first output end of the second three-position three-way valve 122. The input end of the third air spring 133 is connected to the output end of the third two-position two-way valve 123. The input end of the fourth air spring 134 is connected to the output end of the fourth two-position two-way valve 124. The input end of the second air tank 135 is connected to the output end of the first air spring 131, the output end of the second air spring 132, the output end of the third air spring 133 and the output end of the fourth air spring 134. The output end of the second air storage tank 135 is connected to the input end of the second two-position two-way valve 116, and the working medium is selectively stored to reduce the pressure fluctuation of the working medium. The second pressure sensor 136 is connected to the pipeline from the output end of the second air storage tank 135 to the input end of the second two-position two-way valve 116 to measure the pressure of the working medium flowing into the compressor module 11.

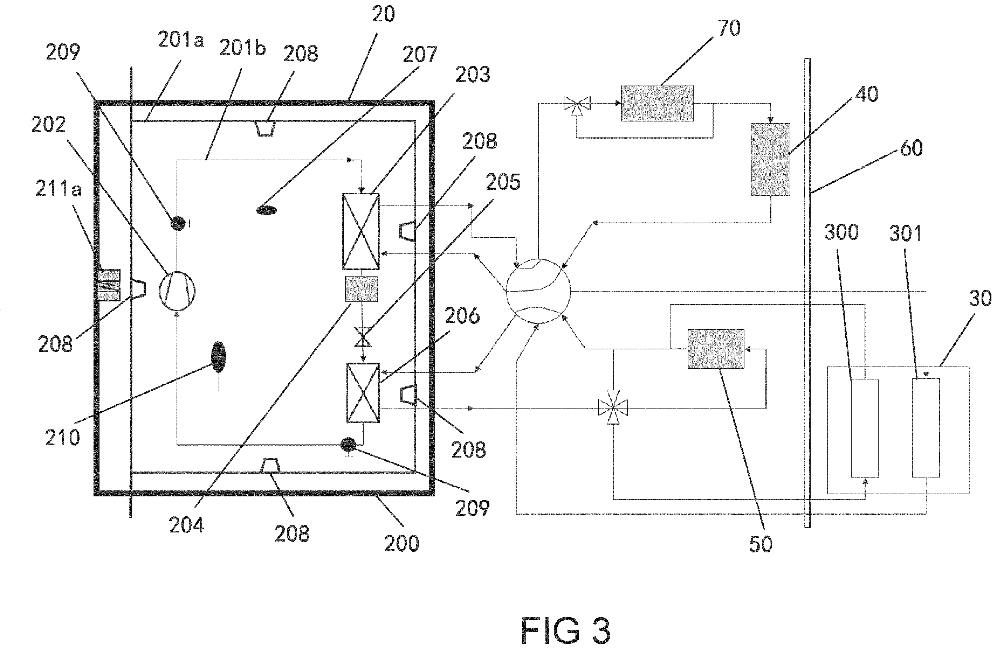

FIG. 3 is a schematic diagram of a temperature control subsystem in an integrated temperature control system according to a first embodiment of the present application. The temperature control subsystem 20 uses R290 (i.e., propane) as a refrigerant and is connected to the valve module 12 of the air suspension subsystem 10 to receive a flame-retardant working medium from the valve module 12 and use it for fire extinguishing within the temperature control subsystem 20. The temperature control subsystem 20 is also connected to the cabin air conditioner 30, the drive unit 40, the external radiator 70, and the battery 50 in the vehicle to perform heat exchange with the cabin air conditioner 30, the drive unit 40, the external radiator 70, and the battery 50. In addition, a firewall 60 is provided between the temperature control subsystem 20 and the cabin of the vehicle to prevent flammable refrigerant from entering the cabin. The cabin air conditioner 30 includes a cabin evaporator 300 and a cabin heater 301.

The temperature control subsystem 20 includes a housing 200 and a fire extinguishing pipeline 201a, a refrigerant pipeline 201b, a compressor 202, a water-cooled condenser 203, a receiver drier 204, an electronic expansion valve 205, a evaporator 206, a working medium concentration sensor 207, a plurality of nozzles 208, a second temperature and pressure sensor 209, and a smoke sensor 210 arranged inside the housing 200. The fire extinguishing pipeline 201a is arranged around the inner wall of the housing 200 and is connected to the valve module 12 of the air suspension subsystem 10 to receive the working medium (e.g., R744 carbon dioxide) from the valve module 12. The refrigerant pipeline 201b starts from the compressor 202, connects the water-cooled condenser 203, the receiver drier 204, the electronic expansion valve 205, and the evaporator 206 in sequence, and then connects back to the compressor 202. The receiver drier 204 is used to filter the refrigerant to remove impurities mixed in the refrigerant, such as rust, dirt, metal particles, etc. These impurities can damage the cylinder wall and bearings of the compressor 202, and clog the filter and the electronic expansion valve 205. The receiver drier 204 is also used to absorb moisture in the refrigerant, because water can cause "ice plugs" and corrode the refrigerant pipeline 201b, making it unable to work normally. The receiver drier 204 is also used to store excess refrigerant from the water-cooled condenser 203 and provide the required amount of refrigerant according to the needs of the evaporator 206. Since the supply of refrigerant is usually greater than the demand of the evaporator 206 when the temperature control subsystem 20 is working normally, a certain amount of liquid refrigerant on the high-pressure side should be maintained. With the change of seasons, when the temperature control subsystem 20 is not running or when it is necessary to detect or replace components in the temperature control subsystem 20, the refrigerant can be collected and stored in the receiver drier 204 to avoid leakage.

The working medium concentration sensor 207 and the smoke sensor 210 are arranged near the center of the housing 200. The working medium concentration sensor 207 and the smoke sensor 210 are used to detect the refrigerant leakage concentration and the signal related to the refrigerant leakage (such as smoke signal, fire signal, etc.) respectively. When the refrigerant leakage causes smoke or fire, the working medium concentration sensor 207 and the smoke sensor 210 will detect this situation in real time and transmit the relevant signal to the controller of the vehicle.

A plurality of nozzles 208 are connected to the fire extinguishing pipeline 201a. The plurality of nozzles 208 may be arranged at equal intervals based on the length of the fire extinguishing pipeline 201a, or at least three of the plurality of nozzles 208 may be arranged at positions close to the compressor 202, the water-cooled condenser 203, and the evaporator 206, respectively, and the spraying directions are toward the compressor 202, the water-cooled condenser 203, and the evaporator 206, respectively. In this way, the working medium (R744) in the first air storage tank 126 of the valve module 12 of the air suspension subsystem 10 enters the fire extinguishing pipeline 201a of the temperature control subsystem 20 via the first three-position three-way valve 121 and the second three-position three-way valve 122. The automatic spraying of the working medium is achieved by adjusting the speed of the motor 112 of the compressor module 11 of the air suspension subsystem 10, the state of the first three-position three-way valve 121 and the second three-position three-way valve 122, and the opening of the nozzle 208, thereby protecting the temperature control subsystem 20 from smoke or combustion risks. Specifically, when the working medium concentration sensor 207 and the smoke sensor 210 detect the refrigerant leakage concentration and the signal related to the refrigerant leakage (such as smoke signal, fire signal, etc.), the alarm signal is transmitted to the vehicle controller. After receiving the alarm signal, the controller starts the motor 112 of the compressor module 11 of the air suspension subsystem 10 to spray sufficient working medium onto the components of the temperature control subsystem 20 through the first three -position three-way valve 121, the second three-position three-way valve 122 and the nozzle 208 to extinguish the fire. At the same time, the power supply of the temperature control subsystem 20 is cut off.

The second temperature and pressure sensor 209 is connected to the refrigerant pipeline 201b, specifically to the section of the refrigerant pipeline 201b connecting the compressor 202 and the water-cooled condenser 203 and the section connecting the evaporator 206 and the compressor 202, so as to measure the temperature and pressure of the refrigerant in the above sections.

The temperature control subsystem 20 adopts a closed cavity design to form an airtight environment inside the housing 200 to prevent refrigerant leakage. To this end, the temperature control subsystem 20 also includes a pressure relief valve 211a disposed on the housing 200. After the working medium provided by the air suspension subsystem 10 completes the fire extinguishing in the temperature control subsystem 20, the pressure relief valve 211a is opened to discharge the working medium into the external environment.

The temperature control subsystem 20 adopts a secondary loop solution, that is, the refrigerant pipeline 201b inside the temperature control subsystem 20 is not directly connected to the heat exchange circuit outside the temperature control subsystem 20, but indirectly exchanges heat through the water-cooled condenser 203 and the evaporator 206. The refrigerants of different temperatures in the water-cooled condenser 203 and the evaporator 206 can realize the cooling and heating functions of the temperature control subsystem 20. The refrigerant in the temperature control subsystem 20 can continue to flow in one direction under cooling or heating conditions. The refrigerant flows sequentially from the compressor 202, through the water-cooled condenser 203, the receiver drier 204, the electronic expansion valve 205 and the evaporator 206, and finally returns to the compressor 202. This configuration of the temperature control subsystem 20 can reduce the system complexity caused by the reversal of the refrigerant when switching between cooling and heating, so it is very easy to achieve a compact modular layout to save costs and improve robustness. The heat exchange circuit outside the temperature control subsystem 20 may include an eight-way valve, a four-way valve, and a three-way valve connected to the cabin air conditioner 30, the drive unit 40, and the battery 50. The coolant is regulated by opening and closing the eight-way valve, the four-way valve, and the three-way valve to realize a wide temperature range integrated heat pump system with waste heat recovery function.

The method of controlling the integrated temperature control system of FIG. 3 comprises the following steps:
Detecting the refrigerant leakage concentration and the signal related to the refrigerant leakage (such as smoke signal, fire signal, etc.) in the temperature control subsystem 20;
Based on the signal related to the refrigerant leakage,

Start the motor 112 of the compressor module 11 of the air suspension subsystem 10, and adjust the first three-position three-way valve 121 and the second three-position three-way valve 122 in the valve module 12 of the air suspension subsystem 10 to deliver the working medium in the air suspension subsystem 10 to the temperature control subsystem 20;

Open the nozzle 208 in the temperature control subsystem 20 to spray the working medium onto the components of the temperature control subsystem 20;

After the spraying continues for a period of time, the pressure relief valve 211a of the temperature control subsystem 20 is opened to discharge the gas in the temperature control subsystem 20.

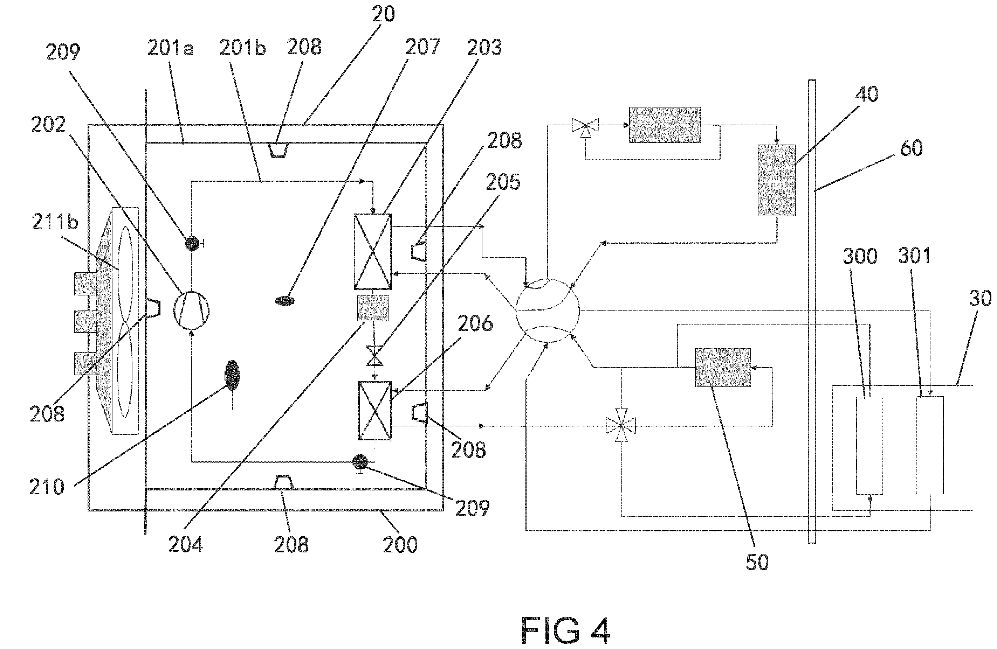

FIG. 4 is a schematic diagram of a temperature control subsystem in an integrated temperature control system according to a second embodiment of the present application. Compared with the first embodiment, in the second embodiment, the temperature control subsystem 20 adopts a semi-open cavity design. This is because the combustion of the refrigerant requires certain conditions, that is, the concentration of the refrigerant must be within the explosion limit range and other combustion conditions must be met at the same time to cause the combustion or explosion of the refrigerant. If the refrigerant leakage concentration can be controlled, the risk of its combustion or explosion can be reduced. To this end, the temperature control subsystem 20 is not equipped with a pressure relief valve 211a, but includes an exhaust fan 211b arranged on the housing 200 to reduce the refrigerant leakage concentration by exhausting. In this way, the temperature control subsystem 20 adds a protection measure: when a refrigerant leakage is detected but the refrigerant leakage concentration is still low (for example, it has not reached the lower limit of the explosion limit range), exhaust is performed through the exhaust fan 211b to reduce the refrigerant leakage concentration; when the refrigerant leakage concentration continues to increase (for example, enters the explosion limit range) or smoke or fire is detected, the nozzle 208 is started to spray the working medium for fire extinguishing.

In order to achieve the above technical effects, it is understandable that the risk level is divided according to the detected refrigerant leakage concentration. The risk level is divided into low, moderate and high. When the risk level is low and moderate, it means that only refrigerant leakage is detected, and no smoke or fire occurs, which belongs to the risk controllable stage, wherein the refrigerant concentration detected at the moderate flammability level is higher than the low flammability level. In this way, the temperature control subsystem 20 takes into account the situation of small leaks, and preventive measures can be started in the early stage of refrigerant leakage to reduce the refrigerant leakage concentration and prevent the refrigerant from reaching the explosion limit. Considering that the explosion limit of the refrigerant R290 targeted by this application is 2.1% to 10.0%, the range of the refrigerant concentration corresponding to the low risk level can be set to 0-1.1%, and the range of the refrigerant leakage concentration corresponding to the moderate risk level can be set to 1.1%-2.1%.

The method of controlling the integrated temperature control system of FIG. 4 comprises the following steps:
Detecting the refrigerant leakage concentration and the signal related to the refrigerant leakage (such as smoke signal, fire signal, etc.) in the temperature control subsystem 20;
Determining a risk level of the temperature control subsystem 20 based on the refrigerant leakage concentration and the signal related to the refrigerant leakage;
When the risk level is low (e.g., the refrigerant leakage concentration is greater than 0 and less than 1.1%), a refrigerant leakage alarm and corresponding driving advice (such as slowing down or pulling over) are sent to the driver of the vehicle;
When the risk level is moderate (e.g., the refrigerant leakage concentration is greater than or equal to 1.1% and less than 2.1%), a refrigerant leakage alarm and corresponding driving advice (such as slowing down or pulling over) are sent to the driver of the vehicle, a distance keeping request is sent to the driver of the vehicle adjacent to the vehicle, and the exhaust fan 211b of the temperature control subsystem 20 is started to reduce the refrigerant leakage concentration;
When the risk level is high (such as the refrigerant leakage concentration is greater than or equal to 2.1%, or a smoke signal or a fire signal is detected), a refrigerant leakage alarm, a parking alarm and an evacuation alarm are sent to the driver of the vehicle, a distance keeping request is sent to the drivers of vehicles adjacent to the vehicle, a rescue request and the location information of the vehicle are sent to the fire department, the motor 112 of the compressor module 11 of the air suspension subsystem 10 is started, the first three-position three-way valve 121 and the second three-position three-way valve 122 in the valve module 12 of the air suspension subsystem 10 are adjusted to transport the working medium in the air suspension subsystem 10 to the temperature control subsystem 20, and the nozzle 208 in the temperature control subsystem 20 is opened to spray the working medium onto the various components of the temperature control subsystem 20.

The foregoing description of the embodiments has been provided for illustrative and descriptive purposes. It is not intended to be exhaustive or to limit the embodiments to the described variants. Many modifications and variations will be apparent to those skilled in the art. The embodiments are selected and described in order to best illustrate the principles and practical applications, so that those skilled in the art can understand the embodiments in their various embodiments and various modifications suitable for their intended use. Within the framework of the embodiments, the above-mentioned components and features can be combined between different embodiments.

## Claims

1. An integrated temperature control system (1) for a vehicle, comprising:
an air suspension subsystem (10) comprising a working medium, the working medium being a flame retardant gas; and
a temperature control subsystem (20), which is connected to the air suspension subsystem (10) and includes a refrigerant;
**characterized in that**
the temperature control subsystem (20) is configured to operably receive the working medium in the air suspension subsystem (10), and is configured to perform control based on the refrigerant leakage concentration in the temperature control subsystem (20) and a signal related to the refrigerant leakage, so as to selectively inject the working medium into the interior of the temperature control subsystem (20).

2. The integrated temperature control system (1) according to claim 1, wherein:
the temperature control subsystem (20) comprises a housing (200) and a fire extinguishing pipeline (201a), a refrigerant pipeline (201b), a compressor (202), a water-cooled condenser (203), a receiver drier (204), an electronic expansion valve (205), a evaporator (206), a working medium concentration sensor (207), a plurality of nozzles (208), a second temperature and pressure sensor (209), and a smoke sensor (210) arranged inside the housing (200);
the fire extinguishing pipeline (201a) is arranged around the inner wall of the housing (200) and is connected to the air suspension subsystem (10) to receive the working medium from the air suspension subsystem (10);
the refrigerant pipeline (201b) includes a refrigerant circulating therein, and is configured to start from the compressor (202), sequentially connect to the water-cooled condenser (203), the receiver drier (204), the electronic expansion valve (205) and the evaporator (206), and then connect back to the compressor (202);
the working medium concentration sensor (207) and the smoke sensor (210) are arranged at a position close to the center of the housing (200), and are respectively configured to detect the refrigerant leakage concentration in the housing (200) and to obtain a signal related to the refrigerant leakage;
the plurality of nozzles (208) are connected to the fire extinguishing pipeline (201a), wherein the plurality of nozzles (208) are arranged at equal intervals based on the length of the fire extinguishing pipeline (201a), or at least three of the plurality of nozzles (208) are arranged at positions close to the compressor (202), the water-cooled condenser (203), and the evaporator (206), and the spraying directions are respectively toward the compressor (202), the water-cooled condenser (203), and the evaporator (206);
the second temperature and pressure sensor (209) is connected to the refrigerant pipeline (201b) to measure the temperature and pressure of the refrigerant in the refrigerant pipeline (201b).

3. The integrated temperature control system (1) according to claim 2, wherein:
the refrigerant pipeline (201b) is configured to indirectly exchange heat with a heat exchange circuit outside the temperature control subsystem (20) through the water-cooled condenser (203) and the evaporator (206).

4. The integrated temperature control system (1) according to claim 1, wherein:
the air suspension subsystem (10) comprises a compressor module (11), a valve module (12) and an air spring module (13);
the compressor module (11) is configured to increase the pressure of the working medium;
the valve module (12) is connected to the compressor module (11) to receive the high-pressure working medium from the compressor module (11), and is configured to selectively deliver the high-pressure working medium to the air spring module (13) and the temperature control subsystem (20);
the air spring module (13) is connected to the compressor module (11) and the valve module (12), and is configured to drive the air spring using the high-pressure working medium from the valve module (12) and to deliver the generated low-pressure working medium back to the compressor module (11).

5. The integrated temperature control system (1) according to any one of claims 2 to 4, wherein:
the housing (200) adopts a closed design;
the temperature control subsystem (20) further comprises a pressure relief valve (211a) arranged on the housing (200);
the pressure relief valve (211a) is configured to open after the working medium has completed fire extinguishing, so as to discharge the working medium into the external environment.

6. The integrated temperature control system (1) according to any one of claims 2 to 4, wherein:
the housing (200) adopts a semi-open design;
the temperature control subsystem (20) further comprises an exhaust fan (211b) arranged on the housing (200);
the exhaust fan (211b) is configured to reduce the refrigerant leakage concentration by exhausting air.

7. The integrated temperature control system (1) according to any one of claims 1 to 4, wherein:
the working medium includes carbon dioxide;
the refrigerant includes propane.

8. A method for controlling an integrated temperature control system (1) of a vehicle, wherein:
the integrated temperature control system (1) is an integrated temperature control system (1) according to any one of claims 1 to 7;
the method comprises the following steps:
detecting the refrigerant leakage concentration and a signal related to the refrigerant leakage in the temperature control subsystem (20);
based on the refrigerant leakage concentration and a signal related to the refrigerant leakage, the working medium in the air suspension subsystem (10) is transported to the temperature control subsystem (20);
spraying the working medium onto various components of the temperature control subsystem (20);
when the spraying continues for a period of time and it is detected that the pressure inside the temperature control subsystem (20) exceeds the set value, the gas in the temperature control subsystem (20) is discharged through the pressure relief valve (211a).

9. A method for controlling an integrated temperature control system (1) of a vehicle, wherein:
the integrated temperature control system (1) is an integrated temperature control system (1) according to any one of claims 1 to 7;
the method comprises the following steps:
detecting the refrigerant leakage concentration and a signal related to the refrigerant leakage in the temperature control subsystem (20);
determining a risk level of the temperature control subsystem (20) based on the refrigerant leakage concentration and a signal related to the refrigerant leakage;
when the risk level is low, sending a refrigerant leakage alarm and corresponding driving advice to a driver of a vehicle to which the integrated temperature control system (1) belongs;
when the risk level is moderate, sending a refrigerant leakage alarm and corresponding driving advice to the driver of the vehicle, sending a distance keeping request to the driver of a vehicle adjacent to the vehicle, and ventilating the temperature control subsystem (20) with the external environment to reduce the refrigerant leakage concentration;
when the risk level is high, a refrigerant leakage alarm, a parking alarm and an evacuation alarm are sent to the driver of the vehicle, a distance keeping request is sent to the drivers of vehicles adjacent to the vehicle, a rescue request and the location information of the vehicle are sent to the fire department, the working medium in the air suspension subsystem (10) is transported to the temperature control subsystem (20), and the working medium is sprayed onto various components of the temperature control subsystem (20).

10. The method according to claim 9, wherein:
the signal related to refrigerant leakage includes smoke signal and fire signal;
determining said risk level includes:
when the refrigerant leakage concentration is greater than 0 and less than the first concentration, the risk level is determined to be low;
when the refrigerant leakage concentration is greater than or equal to the first concentration and less than the second concentration, the risk level is determined to be moderate;
when the refrigerant leakage concentration is greater than or equal to the second concentration, or a smoke signal or a fire signal is detected, the risk level is determined to be high.
